# EUROPÄISCHE PATENTANMELDUNG

(11) **EP 0 614 260 A2**
(43) Veröffentlichungstag der Anmeldung: **07.09.1994**
(21) Anmeldenummer: 94102965.4
(22) Anmeldetag: 28.02.1994
(51) Int. Cl.: H02J 13/00

(54) **Fernwirkgerät für die Überwachung und Steuerung eines Energieversorgungsnetzes mit Kabelstrecken zur Energieübertragung**

(30) Priorität: 03.03.1993 DE 9303092 U
(71) Anmelder: SIEMENS AKTIENGESELLSCHAFT, D-80333 München (DE)
(72) Erfinder: Schemitzek, Erich, Dipl.-Ing. (FH), D-90480 Nürnberg (DE); Lindner, Hans-Peter, Dipl.-Ing. (FH), D-90513 Zirndorf (DE); Öchsle, Walter, Dipl.-Ing. (FH), D-90765 Fürth (DE)

(57) **Zusammenfassung**

An einer zentralen Steuereinheit (ZSE) ist eine Reihe von Unterstationen (RMU-RTU-1,...) angeschlossen, welche jeweils zur Überwachung und Steuerung mit mindestens einem Netzbetriebsmittel (NB1,...) verbunden sind. Ein Datenbus (DB) der Steuereinheit weist Koppelübertrager (KU) auf, welche an den Enden von zur Energieübertragung dienenden Kabelstrecken (NK1,...) am geerdeten Kabelschirm (KE) angeschlossen sind und eine Einspeisung bzw. Auskopplung von Daten aus dem jeweiligen Erdstromkreis (ES1,...) bewirken. Die Steuereinheit (ZSE) speist zyklisch ein "Gruppenabfragetelegramm" (GAT) in den Datenbus (DB) ein. Dieses löst in jeder Unterstation (RMU-RTU-1,...) die Absendung eines separaten "Antworttelegrammes" (AT1,...) an die Steuereinheit aus. In diese sind Änderungen im Status (STI) des angeschlossenen Netzbetriebsmittels (NB1,...)eingetragen. Das Gruppenabfragetelegramm (GAT) wird von Unterstation zu Unterstation weitergegeben. Die Steuereinheit (ZSE) kann aus den empfangenen Antworttelegrammen von allen Unterstationen in der Reihe den Betriebszustand des Energieversorgungsnetzes rekonstruieren.

## Beschreibung

Die Erfindung betrifft ein Fernwirkgerät zur Überwachung und Steuerung von Netzbetriebsmitteln in einem Energieversorgungsnetz, die in Netzpunkten an Kabelstrecken angeschlossen sind, welche zur Energieübertragung dienen.

Fernwirkgeräte haben die Aufgabe, den Betriebszustand eines Energieversorgungsnetzes zu überwachen und gegebenenfalls Steuermaßnahmen insbesondere in Form von Schalthandlungen in ganz bestimmten Netzpunkten auszulösen. Zur Überwachung muß zyklisch der Betriebszustand, d.h. der "Status", von allen zum Energieversorgungsnetz gehörigen Kabelstrecken und von in Netzpunkten an den Kabelenden angeschlossenen Netzbetriebsmitteln erfaßt werden. So muß zum einen eine Überwachung erfolgen, ob alle Kabelstrecken zur Energieübertragung zur Verfügung stehen oder ob einzelne Kabelstrecken ausgefallen sind. Ferner ist es notwendig, ständig den aktuellen Betriebszustand z.B. von Leistungsschaltern zu erfassen, welche als Netzbetriebsmittel in Netzpunkten an den Enden der zur Energieübertragung dienenden Kabelstrecken angeschlossen sind. Schließlich kann ein Fernwirkgerät die Aufgabe haben, Steuerbefehle an diese Netzbetriebsmittel zu senden und anschließend zu überwachen, ob sich der Betriebszustand des angesprochenen Netzbetriebsmittels in der durch den Steuerbefehl beabsichtigten Weise und in dem dafür vorgesehenen Zeitraum verändert hat.

Bei Fernwirkgeraten muß die Überwachung aller Kabelstrecken und Netzbetriebsmittel zyklisch erfolgen, d.h. die Abfrage von deren Betriebszuständen muß nach Ablauf von festen Zeiträumen ständig wiederholt werden. Dabei besteht das Problem, daß die Wiederholungsrate für derartige Überwachungszyklen nicht zu klein sein darf, d.h. daß zum einen der Zeitraum zwischen dem Beginn und dem positiven Abschluß einer Überwachung aller Netzbetriebsmittel und Kabelstrecken, und zum anderen der Zeitraum bis zum erneuten Start eines Überwachungszyklusses nicht zu groß sein dürfen. Anderenfalls wäre die Steuerbarkeit des Energieversorgungsnetzes über das Fernwirkgerät eingeschränkt. Wären nämlich die obengenannten Zeiträume zu lang, so könnte z.B. die Wirkung eines zwischen zwei Überwachungszyklen an ein Netzbetriebsmittel abgeschickten Schaltbefehles nur verzögert im folgenden Überwachungszyklus bei der Erfassung von dessen aktuellem Status beobachtet werden. Für den Fall, daß die durch den Schaltbefehl gewünschte Statusänderung des Netzbetriebsmittels nicht eingetreten ist, könnte die Auswirkung von wiederholten Schaltversuchen wiederum erst mit Ablauf von weiteren Überwachungszyklen beobachtet werden.

Der Erfindung liegt die Aufgabe zugrunde, ein Fernwirkgerät so auszugestalten, daß zum einen eine Überwachung aller Netzbetriebsmittel und Kabelstrecken eines Energieversorgungsnetzes mit einer hohen Wiederholungsrate möglich ist, also der aktuelle "Status" eines jeden Teiles des Energieversorgungsnetzes schnell vom Fernwirkgerät beobachtet werden kann. Zum anderen soll es die Gestaltung des Fernwirkgerätes ermöglichen, große Datenmengen als "Statusinformationen" möglichst ohne Beeinträchtigung in der Schnelligkeit der Überwachung von den Netzbetriebsmitteln zum Fernwirkgerät zu übertragen.

Die Aufgabe wird gelöst mit dem im Patentanspruch angegebenen Fernwirkgerät. Vorteilhafte Ausführungsformen der Erfindung sind in den Unteransprüchen enthalten. Die Erfindung wird anhand eines in den nachfolgend kurz angeführten Figuren dargestellten, bevorzugten Ausführungsbeispieles näher erläutert. Dabei zeigt:
- FIG 1: ein Blockschaltbild eines Teiles eines Energieversorgungsnetzes, und die zur Überwachung und Steuerung dazugehöriger Kabelstrecken und Netzbetriebsmittel dienenden Teile des erfindungsgemäßen Fernwirkgerätes,
- FIG 2: ein Orts- und Zeitdiagramm zur beispielhaften Darstellung des Laufes eines gemäß der Erfindung in den Datenbus des Fernwirkgerätes eingespeisten "Gruppenabfragetelegrammes", und der daraufhin von jeder Unterstation des Fernwirkgerätes zurückgesendeten "Antworttelegramme",
- FIG 3: den beispielhaften Aufbau eines erfindungsgemäßen "Gruppenabfragetelegrammes",
- FIG 4: den beispielhaften Aufbau eines erfindungsgemäßen "Antworttelegrammes",
- FIG 5: ein Orts- und Zeitdiagramm zur beispielhaften Darstellung des Laufes von Gruppenabfrage-, Antwort- und Zusatz-Antworttelegramm gemäß einer weiteren Ausführungsform der Erfindung,
- FIG 6: den beispielhaften Aufbau eines erfindungsgemäßen "Zusatz-Antworttelegrammes", und
- FIG 7: den beispielhaften Aufbau eines erfindungsgemäßen "Befehlstelegrammes".

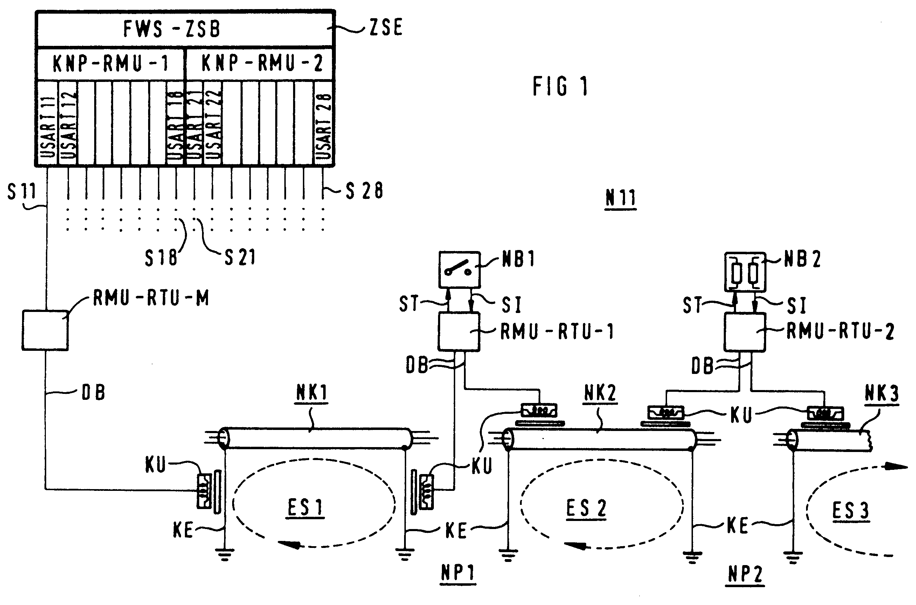

In FIG 1 ist beispielhaft ein linienförmiger Netzbereich N11 eines Energieversorgungsnetzes dargestellt, welches z.B. zur Versorgung von Städten bzw. Stadtteilen geeignet ist. Es sind eine Vielzahl von zur Energieübertragung dienenden Kabelstrecken vorhanden, von denen in FIG 1 beispielhaft die Kabelstrecken NK1,NK2,NK3 dargestellt sind. Jede Kabelstrecke weist an den Enden jeweils eine Kabelschirmerdung KE auf. Die hierdurch über den jeweiligen Kabelschirm und Bezugserde gebildeten Erdstromkreise sind im Beispiel der FIG 1 in Form von jeweils einem strichlierten Oval ES1, ES2,ES3 dargestellt. Die Enden der Kabelstrecken sind in Netzpunkten über Netzbetriebsmittel miteinander verbunden, z.B. über Einspeise- bzw. Abzweigtransformatoren, Leistungsschalter und dgl..

Im Beispiel der FIG 1 sind der Netzpunkt NP1 zwischen den Kabelstrecken NK1,NK2 und der Netzpunkt NP2 zwischen den Kabelstrecken NK2,NK3 beispielhaft dargestellt. Im Netzpunkt NP1 befindet sich das Netzbetriebsmittel NB1, welches als Verbindungsstelle der Enden der Kabelstrecken NK1,NK2 dient. Dieses ist symbolisch als ein Leistungsschalter gezeigt. Auf eine detaillierte Darstellung desselben und von dessen Anschluß mit den Kabelenden wurde aus Gründen der Übersichtlichkeit verzichtet. In entsprechender Weise verbindet im Netzpunkt NP1 das Netzbetriebsmittel NB2 beispielhaft in Form eines Transformators die Enden der Kabelstrecken NK2,NK3.

Gemäß der Erfindung weist das Fernwirkgerät eine zentrale Steuereinheit auf, an die über einen Datenbus mindestens eine Gruppe von Unterstationen in Reihe angeschlossen ist. Jede der Unterstationen ist einem Netzpunkt zugeordnet und mit dem dortigen Netzbetriebsmittel zu dessen Überwachung und gegebenenfalls Steuerung verbunden. Erfindungsgemäß weist das Fernwirkgerät einen Datenbus mit Koppelübertragern auf, die jeweils an den Enden der Kabelstrecken am geerdeten Kabelschirm angeschlossen sind. Mittels der Koppelübertrager wird eine Dateneinspeisung bzw. Datenauskopplung in den bzw. aus dem Erdstromkreis der jeweiligen Kabelstrecke bewirkt. Vorteilhaft sind somit die Schirme der u.U. relativ langen Kabelstrecken des Energieversorgungsnetzes gleichzeitig ein Teil des die Unterstationen des Fernwirkgerätes mit der zentralen Steuereinheit verbindenden Datenbusses.

Diese Gestaltung des Fernwirkgerätes ist in FIG 1 beispielhaft dargestellt. Dabei ist die aus den Unterstationen RMU-RTU-1 und RMU-RTU-2 bestehende Gruppe von Unterstationen über einen Datenbus DB in Reihe miteinander verbunden und an eine zentrale Steuereinheit ZSE angeschlossen. Jede Unterstation ist im jeweiligen Netzpunkt NP1,NP2 mit dem dortigen Netzbetriebsmittel NB1,NB2 zur Überwachung und Steuerung verbunden. In FIG 1 sind hierzu beispielhaft von der jeweiligen Unterstation zum Netzbetriebsmittel gehende Steuerleitungen ST, und vom Netzbetriebsmittel zur Unterstation gehende Signalleitungen SE dargestellt. Über die Steuerleitungen ST können Steuerbefehle an das Netzbetriebsmittel weitergegeben werden, welche von der zentralen Steuereinheit SE in den Datenbus DB eingespeist und von der jeweiligen Unterstation empfangen wurden. Über die Signalleitungen SI können den aktuellen Betriebszustand des angeschlossenen Netzbetriebsmittels kennzeichnende "Statusinformationen" von der jeweiligen Unterstation gelesen und an die zentrale Steuereinheit ZSE gerichtet in den Datenbus DB eingespeist werden.

Erfindungsgemäß weist der Datenbus DB Koppelübertrager KU auf. So ist z.B. die Datenschnittstelle S11 am Ausgang der zentralen Steuereinheit ZSE über einen Koppelübertrager KU mit einem Ende des geerdeten Kabelschirmes KE der Kabelstrecke NK1 verbunden. Ferner ist in FIG 1 die erste Unterstation RMU-RTU-1 der Gruppe über je einen Koppelübertrager KU mit den zugewandten Enden der geerdeten Kabelschirme KE der Kabelstrecken NK1,NK2 verbunden. Ferner ist im Netzpunkt NP2 die zweite Unterstation RMU-RTU-2 über je einen Koppelübertrager KU mit den zugewandten Enden der geerdeten Kabelschirme KE der Kabelstrecken NK2,NK3 verbunden. In der gleichen Weise kann die Reihe der Unterstationen durch weitere, von dem in FIG 1 nicht dargestellten anderen Ende des geerdeten Kabelschirmes der Kabelstrecke NK3 abgehende Koppelübertrager verlängert werden. Bevorzugt sind in der Praxis 16 Unterstationen RMU-RTU-1... RMU-RTU-16 zu einer Gruppe in Reihe zusammengeschaltet, wobei erfindungsgemäß die geerdeten Schirme dazwischen liegender Kabelstrecken des Energieversorgungsnetzes in Verlängerung des Datenbusses DB zur Datenübertragung ausgenutzt werden. Die Koppelübertrager KU vereinfachen den Installationsaufwand und die Topologie des Datenbusses DB des Fernwirkgerätes erheblich.

In FIG 1 ist zudem eine bevorzugte Ausführungsform der zentralen Steuereinheit ZSE des erfindungsgemäßen Fernwirksysstems dargestellt. Diese dient als "Master" zum Betrieb der über den Datenbus DB, die Koppelübertrager KU und die Kabelstrecken NK1... "kettenartig" verbundenen "Slave"-Unterstationen. Im Beispiel der FIG 1 weist die zentrale Steuereinheit SE eine zentrale Steuerungsbaugruppe FWS-ZSB auf, an die zwei Knotenpunktsrechner KNP-RMU-1, KNP-RMU-2 angeschlossen sind. Jeder Knotenpunktsrechner weist am Ausgang wiederum jeweils 8 Anschaltbaugruppen USART11...18 bzw. USART21...28 auf. Am Ausgang einer jeden Anschaltbaugruppe steht eine Datenschnittstelle S11...S18 bzw. S21...S28 zur Verfügung, an die jeweils eine gemäß der Erfindung in Reihe angeordnete Gruppe von Unterstationen angeschlossen werden kann, die bevorzugt einem linienförmigen Netzbereich zugeordnet sind. Im Beispiel der FIG 1 ist aus Gründen der Übersichtlichkeit lediglich an der ersten Datenschnittstelle S11 über eine als ein Modem dienende Unterstation RMU-RTU-M die bereits beschriebene Gruppe von Unterstationen RMU-RTU-1, RMU-RTU-2,... für die beispielhaften Netzbetriebsmittel NB1,NB2,... in den Netzpunkten NP1,NP2,... dargestellt. Selbstverständlich können in der gleichen Weise an die übrigen Datenschnittstellen S12,... weitere Reihen von Unterstationen über jeweils einen weiteren Datenbus DB und zwischenliegende Kabelstrecken für weitere Netzbetriebsmittel eines Energieversorgungsnetzes angeschlossen werden.

Erfindungsgemäß speist die zentrale Steuereinheit zyklisch ein "Gruppenabfragetelegramm" in den Datenbus ein. Dieses wird von der ersten Unterstation in der Reihe der zu einer Gruppe gehörigen Unterstationen empfangen. Hierauf erfaßt diese Unterstation zumindest die seit Empfang des vorangegangenen Gruppenabfragetelegrammes eingetretenen Änderungen im "Status" des angeschlossenen Netzbetriebsmittels. Diese "Statusinformationen" werden in Form eines "Antworttelegrammes" in den Datenbus an die zentrale Steuereinheit gerichtet eingespeist. Nach Ablauf einer Wartezeit wird schließlich das von der Unterstation empfangene "Gruppenabfragetelegramm" in Richtung auf die in der Reihe folgende Unterstation der Gruppe erneut in den Datenbus eingespeist.

Die folgende Unterstation empfängt das Gruppenabfragetelegramm, und sendet daraufhin wiederum ein an die zentrale Steuereinheit gerichtetes und die aktuellen Änderungen im Status des angeschlossenen Netzbetriebsmittels enthaltendes Antworttelegramm ab. Nach Ablauf einer Wartezeit speist auch diese Unterstation das Gruppenabfragetelegramm wiederum in Richtung auf die in der Reihe folgende Unterstation erneut in den Datenbus ein. Auf diese Weise wird das Gruppenabfragetelegramm von Unterstation zu Unterstation weitergereicht und durchläuft die ganze Reihe der zu einer Gruppe gehörigen Unterstationen. Gleichzeitig wird durch den Empfang des Gruppenabfragetelegrammes in jeder Unterstation die Absendung eines Antworttelegrammes ausgelöst. Diese Antworttelegramme werden sukzessive von der zentralen Steuereinheit empfangen, welche hieraus den aktuellen Betriebszustand des Energieversorgungsnetzes rekonstruiert.

Zum einen wird der zentralen Steuereinheit durch die in jedem Antworttelegramm enthaltene Statusinformation der aktuelle Betriebszustand eines jeden Netzbetriebsmittels mitgeteilt. Zum anderen kann die zentrale Steuereinheit aus dem ordnungsgemäßen Empfang der zu erwartenden Antworttelegramme von den einzelnen Unterstationen bzw. aus dem Ausbleiben von einzelnen oder mehreren Antworttelegrammen den Betriebszustand der Kabelstrecken des Energieversorgungsnetzes bzw. die Funktionsfähigkeit einzelner Unterstationen der Gruppe des Fernwirkgerätes rekonstruieren.

Es sei beispielhaft angenommen, daß 16 in Reihe zusammengeschaltete Unterstationen eine Gruppe bilden. Erhält beispielsweise die zentrale Steuereinheit nach Einspeisung eines Gruppenabfragetelegrammes in den Datenbus Antworttelegramme nur von den ersten 4 Unterstationen, wahrend die zu erwartenden Antworttelegramme der restlichen 12 in der Reihe folgenden Unterstationen ausbleiben, so ist dies ein Indiz dafür, daß die zwischen der vierten und fünften Unterstation liegende Kabelstrecke gestört ist. Möglicherweise ist eine mechanische Beschädigung eingetreten bzw. es sind die an den Kabelenden angeschlossenen Koppelübertrager oder die Datenbusanschlußleitungen defekt. Bleibt in einem anderen Beispiel dagegen das Antworttelegramm z.B. der Unterstation 9 aus, während die Antworttelegramme der in der Reihe voran und danach liegenden Unterstationen 1-8 und 10-16 ordnungsgemäß eintreffen, so ist dies ein Indiz für eine interne Störung der dortigen Betriebsmittel Unterstation 9.

Die Gestaltung des erfindungsgemäßen Fernwirkgeräts weist eine Vielzahl von Vorteilen auf. So kann durch die Einspeisung eines einzigen Gruppenabfragetelegrammes pro Abfragezyklus in den Datenbus und dessen sukzessive Weitergabe von Unterstation zu Unterstation auf schnelle Weise jede Unterstation der Gruppe erreicht werden. Die Dauer eines derartigen "Abfragezyklusses", d.h. der Zeitraum zwischen der Einspeisung eines Gruppenabfragetelegrammes in den Datenbus und dem Empfang des Antworttelegrammes von der von der letzten Unterstation in der Reihe durch die zentrale Steuereinheit ist so kurz als möglich. So kann die Steuereinheit die ersten zu erwartenden Antworttelegramme der am Anfang der Reihe liegenden Unterstationen bereits empfangen und auswerten, während der Durchlauf des Gruppenabfragetelegrammes, d.h. dessen Empfang und erneute Einspeisung durch weiter hinten in der Reihe liegende Unterstationen, noch voll im Gange ist. Die zentrale Steuereinheit muß somit mit der Auswertung der übermittelten Statusinformationen eines jeden Netzbetriebsmittels nicht warten, bis das eingespeiste Gruppenabfragetelegramm die Reihe der Unterstationen durchlaufen hat. Ferner ist kein Rücklauf des Gruppenabfragetelegrammes von der letzten Unterstation der Reihe bis zur zentralen Steuereinheit notwendig.

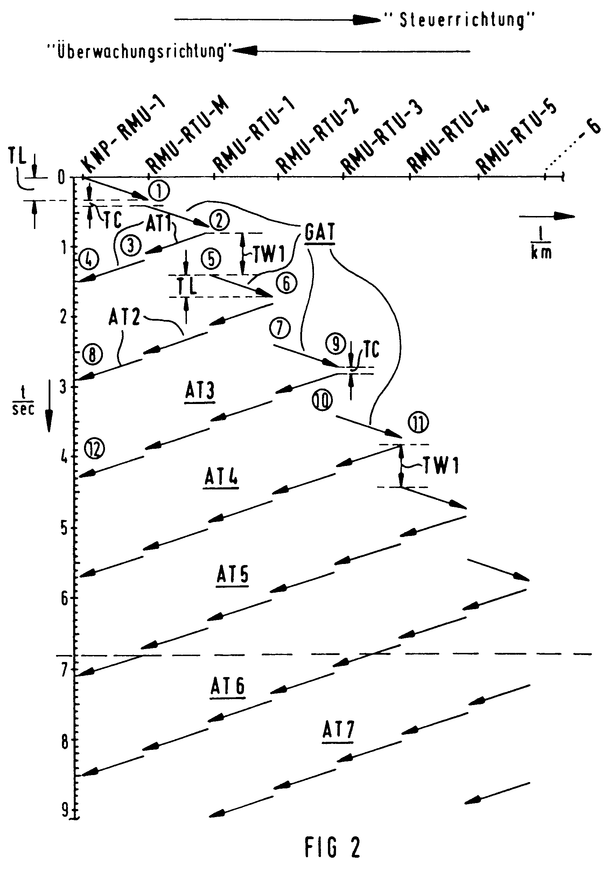

Zudem ist es besonders vorteilhaft, daß jede Unterstation die aktuellen Änderungen im Status des mit ihr verbundenen Netzbetriebsmittels in Form eines separaten Antworttelegrammes an die zentrale Steuereinheit übermittelt. Hierdurch ist es möglich, daß die Antworttelegramme von allen Unterstationen nahezu den gleichen Aufbau aufweisen und kaum Unterschiede in den Telegrammlängen auftreten. Dies begünstigt die fehlerfreie Übertragung der Antworttelegramme von der jeweiligen Unterstation zurück über die Reihe der voranliegenden Unterstationen bis zur zentralen Steuereinheit. Gleichzeitig wird deren Auswertung in der zentralen Steuereinheit vereinfacht. Weitere Vorteile des erfindungsgemäßen Fernwirkgerätes werden anhand der nachfolgenden Erläuterung des in den Figuren 2-7 dargestellten Ausführungsbeispieles ersichtlich.

FIG 2 zeigt ein beispielhaftes Orts- und Zeitdiagramm zur Darstellung des Laufes eines gemäß der Erfindung in den Datenbus eingespeisten Gruppenabfragetelegrammes, und den Lauf der daraufhin von den in Reihe angeordneten Unterstationen des Fernwirkgerätes an die zentrale Steuereinheit zurückgesendeten Antworttelegramme. Dabei sind auf der horizontalen Wegachse, welche mit dem Lauffaktor l/km gekennnzeichnet ist, die wesentlichen Betriebsmittel des Fernwirkgerätes dargestellt. So befindet sich im Ursprung des Diagrammes der Knotenpunktsrechner KNP-RMU1, an den sich die als ein Modem betriebene, und zur Dateneinkopplung bzw. Auskopplung in den bzw. aus dem Datenbus dienende Unterstation RMU-RTU-M anschließt. Es folgen die über den Datenbus in Reihe miteinander verkoppelten Unterstationen RMU-RTU-1...RMU-RTU-6, welche jeweils zur Überwachung und Steuerung eines angeschlossenen Netzbetriebsmittels dienen. Zur besseren Übersicht wurde die Darstellung im Beispiel der FIG 2 so gewählt, daß der Knotenpunktsrechner und alle Unterstationen gleich weit voneinander entfernt sind. In der Praxis können natürlich die zwischen den Unterstationen liegenden Kabelstrecken, deren Abschirmungen erfindungsgemäß mit zur Datenübertragung dienen, unterschiedliche Längen aufweisen. Die Weitergaberichtung eines Datentelegrammes von einer Unterstation an eine folgende Unterstation, welche von der zentralen Steuereinheit weiter entfernt ist, d.h. in Richtung auf das Ende der Reihe von Unterstationen, wird "Steuerrichtung" genannt. Umgekehrt erfolgt die Weitergabe eines Telegrammes von einer Unterstation zu einer Unterstation, welche näher an der zentralen Steuereinheit angeordnet ist, d.h. in Richtung auf den Anfang der Reihe von Unterstationen, in "Überwachungsrichtung". Die senkrechte Achse in FIG 2 ist die Zeitachse und mit dem Lauffaktor t/sec eingeteilt.

Anhand von FIG 2 wird der Ablauf eines "Gruppenabfragezyklusses" beispielhaft erläutert. Dabei wird zur Überwachung des Energieversorgungsnetzes und dessen Betriebsmitteln ein Gruppenabfragetelegramme GAT in "Steuerrichtung" in den Datenbus eingespeist. Dessen Lauf von Unterstation zu Unterstation ist in FIG 2 durch jeweils einen von links oben nach rechts unten geneigten Pfeil dargestellt. So wird das Gruppenabfragetelegramm GAT im Koordinatenursprung beim Zeitpunkt t = 0 vom Knotenpunktsrechner KMP-RMU-1 abgesendet und nach einer Telegrammlaufzeit TL von ca. 0,3 Sek. von der "Modem-Unterstation RMU-RTU-M" empfangen. In FIG 2 ist dieser Punkt durch das mit 1 markierte Pfeilende gekennzeichnet. Nach Ablauf einer internen Telegrammebearbeitungszeit TC von ca. 0,1 Sek. speist die Unterstation ...-M das Gruppenabfragetelegramm GAT in Richtung auf die in der Reihe folgende Unterstation RMU-RTU-1 erneut in den Datenbus DB ein. Das Telegramm wird ca. im Zeitpunkt 0,7 Sek. von dieser Unterstation empfangen, was in FIG 2 durch das mit 2 markierte Ende eines weiteren Telegrammlaufpfeiles dargestellt ist.

Aufgrund des Empfanges des Gruppenabfragetelegrammes GAT fragt die Unterstation RMU-RTU-1 möglicherweise eingetretene aktuelle Änderungen im Status des angeschlossenen Netzbetriebsmittels NB1 ab. Daraufhin wird nach Ablauf einer internen Telegrammbearbeitungszeit TC ein an den Knotenpunktsrechner KNP-RMU-1 der zentralen Steuereinheit gerichtetes Antworttelegramm AT1 in "Überwachungsrichtung" in den Datenbus DB eingespeist. Im Antworttelegramm sind in einem ersten Bereich die aufgetretenen aktuellen Änderungen im Betriebszustand des Netzbetriebsmittels eingetragen. Im Beispiel der FIG 2 ist der Lauf dieses und weiterer Antworttelegramme AT2... von anderen Unterstationen durch jeweils einen von rechts oben nach links unten geneigten Pfeil dargestellt.

So wird das von der Unterstation ...1 eingespeiste Antworttelegramm AT1 nach Ablauf einer Telegrammlaufzeit TL von wiederum ca. 0,3 Sek. in dem mit 3 markierten Punkt von der benachbarten Unterstation RMU-RTU-M empfangen und nach Ablauf einer internen Telegrammbearbeitungszeit TC erneut in "Überwachungsrichtung" in den Datenbus eingespeist, so daß es nach Ablauf einer weiteren Telegrammlaufzeit TL in dem mit 4 markierten Punkt vom Knotenpunktsrechner KNP-... empfangen und ausgewertet werden kann. In diesem Moment stehen dem Knotenpunktsrechner bereits die Daten über den aktuellen Betriebszustand, d.h. den "Status", des an der Unterstation RMU-RTU-1 angeschlossenen Netzbetriebsmittels zur Verfügung. Aufgrund des Empfanges des Antworttelegrammes AT1 von der Unterstation ...-1 ist ferner sichergestellt, daß die zur Energieübertragung bereitstehenden Kabelstrecken bis zum Netzbetriebsmittel NB1 der Unterstation ...-1 nicht gestört sind.

Die Unterstation RMU-RTU-1 speist das Gruppenabfragetelegramm GAT nach Ablauf einer Wartezeit TW1 erneut in Richtung auf die in der Reihe folgende Unterstation RMU-RTU-2 in "Steuerrichtung" in den Datenbus ein. In FIG 2 ist dessen Lauf durch den vom Punkt 5 zum Punkt 6 geneigten Pfeil dargestellt. In diesem Punkt wird das Gruppenabfragetelegramm von der Unterstation ...2 empfangen, welche daraufhin mögliche aktuelle Änderungen im Status des angeschlossenen Netzbetriebsmittels NB2 abfragt und diese am Ende der internen Telegrammbearbeitungszeit TC in Form eines eigenen Antworttelegrammes AT2 in "Überwachungsrichtung" in den Datenbus einspeist. Dieses Antworttelegramm AT2 wird in dem mit 8 markierten Zeitpunkt bei t = 2,9 Sek. vom Knotenpunktsrechner KNP-... empfangen und ausgewertet.

Der weitere Ablauf des "Gruppenabfragezyklusses" erfolgt in der eben beschriebenen Weise. So speist auch die Unterstation ...-2 das Gruppenabfragetelegramm GAT nach Ablauf einer Wartezeit TW1 in dem mit 7 markierten Punkt in "Steuerrichtung" in den Datenbus ein. Es wird an dem mit 9 markierten Ende des dazugehörigen Telegrammlaufpfeiles von der folgenden Unterstation RMU-RTU-3 empfangen, welches daraufhin ein aktuelle Änderungen im Status des dazugehörigen Netzbetriebsmittels NB3 enthaltendes Antworttelegrammes AT3 in "Überwachungsrichtung" in den Datenbus einspeist. Dieses Antworttelegramm wird vom Knotenpunktsrechner KNP-... in dem mit 12 markierten Punkt empfangen und ausgewertet. Zwischenzeitlich speist die Unterstation ...-3 nach Ablauf einer Wartezeit TW1 das Gruppenabfragetelegramm GAT wiederum in Richtung auf die in der Reihe folgende Unterstation RMU-RTU-4 ein,usw.

Die anhand von FIG 2 erläuterte Fuktionsweise des erfindungsgemäßen Fernwirkgerätes weist eine Vielzahl von Vorteilen auf. So ist ein einziges Gruppenabfragetelegramm GAT ausreichend, um die Unterstationen zur Übermittlung der Statusinformationen der angeschlossenen Netzbetriebsmittel durch der Absendung einzelner Antworttelegramme AT1... AT6... zu veranlassen. Dies hat den Vorteil, daß die den Betriebszustand der Netzbetriebsmittel kennzeichnenden Antworttelegramme schnell zur zentralen Steuereinheit zurückgelangen. So ist im Beispiel der FIG 2 zu erkennen, daß z.B. das Antworttelegramm AT3 in dem Punkt 12 bei t = 4,3 Sek. vom Knotenpunktsrechner KNP-... empfangen werden kann, während gleichzeitig ein von der Unterstation RMU-RTU-4 in "Überwachungsrichtung" eingespeistes weiteres Antworttelegramm AT4 in Richtung zum Knotenpunktsrechner abgesendet wurden und auf diesem Weg gerade von der Unterstation ...-3 empfangen wird. Auf dem Datenbus und den Schirmungen der dazugehörigen Kabelstrecken des Energieversorgungsnetzes sind somit gleichzeitig das Gruppenabfragetelegramm GAT in "Steuerrichtung" und gegebenenfalls mehrere Antworttelegramme in "Überwachungsrichtung" unterwegs. So sind z.B. im Zeitpunkt t = 6,8 Sek. neben dem Gruppenabfragetelegramm GAT mindestens die Antworttelegramme AT5 und AT6 von den Unterstationen RMU-RTU-5 und ...-6 unterwegs. Der erfindungsgemäße Aufbau des Fernwirkgerätes stellt einen optimalen Kompromiß dar zwischen der Gesamtdauer eines "Gruppenabfragezyklusses" einerseits, d.h. der Zeit zum Durchlauf des Gruppenabfragetelegrammes GAT bis zur letzten Unterstation einer Gruppe und dem Empfang des von dieser Unterstation in "Überwachungsrichtung" abgesetzten Antworttelegrammes durch die zentrale Steuereinheit, und andererseits der Länge eines jeden Telegrammes.

Bevorzugt weisen alle Antworttelegramme AT1... den gleichen Aufbau auf. Die zentrale Steuereinheit muß somit keine unterschiedlichen Antworttelegrammtypen unterscheiden. Insbesondere ist die Länge eines jeden Antworttelegrammes unabhängig von der Position der dazugehörigen Unterstation in der Reihe der Unterstationen der Gruppe. Für die Funktionsfähigkeit des in FIG 2 beispielhaft dargestellten "Gruppenabfragezyklusses" ist es lediglich notwendig, daß eine jede Unterstation zwischen der Absendung ihres Antworttelegrammes in "Überwachungsrichtung" und der Weitergabe des Gruppenabfragetelegrammes in "Steuerrichtung" eine Wartezeit TW1 einhält.

Aufbau und Funktionsweise des erfindungsgemäßen Fernwirkgerätes haben den weiteren Vorteil, daß die zentrale Steuereinheit auf einfache Weise die Funktionsfähigkeit der Datenübertragung auf dem Datenbus und den Schirmungen der dazwischenliegenden Kabelstrecken des Energieversorgungsnetzes, und damit gleichzeitig auch die Fähigkeit der Kabelstrecken zur Energieübertragung, überwachen kann. Gemäß einer bevorzugten Ausführungsform der Erfindung überwacht die zentrale Steuereinheit hierzu nach Einspeisung eines Gruppenabfragetelegrammes, ob die von jeder einzelnen Unterstation einer Gruppe zu erwartenden Antworttelegramme unter Berücksichtigung der bekannten Lauf-, Warte- und Bearbeitungszeiten annähernd im richtigen Zeitpunkt empfangen werden können. So umfaßt im Beispiel der FIG 2 der Zeitraum von der Einspeisung des Gruppenabfragetelegrammes GAT im Koordinatenursprung bis zum Empfang des Antworttelegrammes AT1 im Punkt 4 bei t = 1,5 Sek. durch den Knotenpunktsrechner KNP-... mindestens vier Telegrammlaufzeiten TL und drei interne Telegrammbearbeitungszeiten TC. Ferner umfaßt beispielsweise der Zeitraum zwischen der Einspeisung des Gruppenabfragetelegrammes GAT bei t = 0 bis zum Empfang des Antworttelegrammes AT2 im Punkt 8 bei t = 2,9 Sek. mindestens sechs Telegrammlaufzeiten TL, fünf interne Telegrammbearbeitungszeiten TC und eine Wartezeit TW1. Die Zeitpunkte, bei denen die Antworttelegramme der einzelnen Unterstationen bei ordnungsgemäßem Ablauf des Gruppenabfragezyklusses von der zentralen Steuereinheit empfangen werden müßten, können somit auch bei unterschiedlichen Längen der Kabelstrecken relativ genau kalkuliert werden.

Bleibt somit in einem vorbestimmten Zeitpunkt ein zu erwartendes Antworttelegramm aus bzw. verzögert sich dessen Empfang, so ist dies ein Indiz für Störungen in der Datenübertragung und/oder der Energieübertragung auf den Kabelstrecken bzw. von Störungen im Inneren einer Unterstation. Können z.B. die Antworttelegramme von Unterstationen nicht mehr empfangen werden, welche jenseits eines bestimmten Punktes in der Reihe liegen, so ist dies ein Zeichen für eine möglicherweise mechanische Beschädigung der vor diesem Punkt liegenden Kabelstrecke. Das erfindungsgemäße Fernwirkgerät kann somit auch gestörte Kabelstrecken lokalisieren.

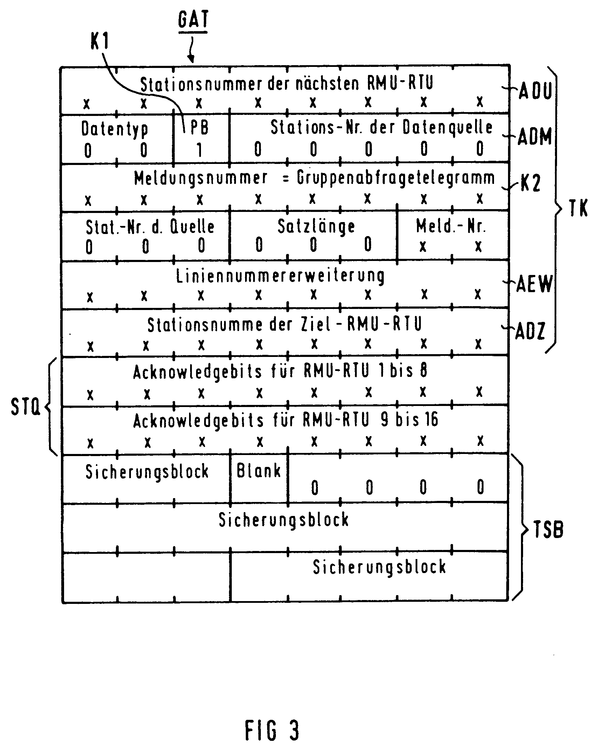

FIG 3 zeigt beispielhaft den bevorzugten Aufbau eines "Gruppenabfragetelegrammes". Jede Zeile des Telegramms stellt dabei ein Datenbyte dar, welche sich zu drei Gruppen zusammenfassen lassen. Die ersten sechs Bytes bilden den "Telegrammkopf TK, die folgenden zwei Bytes bilden einen "Nutzdatenbereich" STQ und die letzten drei Bytes bilden einen "Telegrammsicherungsbereich" TSB.

Gemäß einer weiteren Ausführungsform der Erfindung enthält das Gruppenabfragetelegramm GAT bevorzugt im Telegrammkopf TK einen ersten Bereich ADU, in den die zentrale Steuereinheit ZSE vor dessen Einspeisung in den Datenbus DB die Adresse der ersten Unterstation RMU-RTU-1 in der Reihe der Unterstationen der Gruppen einträgt. Die Unterstationen sind so ausgelegt, daß sie ein auf dem Datenbus befindliches Gruppenabfragetelegramm GAT nur dann empfangen, wenn die im ersten Bereich ADU eingetragene Adresse mit der eigenen Adresse übereinstimmt. Auf diese Weise ist sichergestellt, daß das Gruppenabfragetelegramm nur von der gewünschten, d.h. der in der Reihe der Unterstationen jeweils unmittelbar folgenden Station empfangen wird. Es ist somit ausgeschlossen, das fälschlicherweise eine nicht anzusprechende Unterstation das Gruppenabfragetelegramm z.B. aufgrund von Übersprechen oder Fehlleitungen auf den Kabelschirmen empfängt und ein Antworttelegramm azyklisch absendet.

Hat eine Unterstation das Gruppenabfragetelegramm GAT ordnungsgemäß empfangen und daraufhin reguläre im Gruppenabfragezyklus ein Antworttelegramm in "Überwachungsrichtung" abgesendet, so trägt diese Unterstation vor der erneuten Einspeisung des Gruppenabfragetelegrammes GAT in "Steuerrichtung" wiederum die Adresse der in der Reihe folgenden Unterstation in den ersten Bereich ADU des Gruppenabfragetelegrammes GAT ein. Aufgrund der ständigen Aktualisierung der Adresse der folgenden Unterstation im ersten Bereich ADU ist sichergestellt, daß das Gruppenabfragetelegramm ordnungsgemäß von Unterstation zu Unterstation bis zum Erreichen der letzten Unterstation in der Reihe weitergereicht wird.

Bei dem in FIG 3 dargestellten Aufbau eines Gruppenabfragetelegrammes GAT sind im Telegrammkopf TK bevorzugte weitere Bereiche enthalten. So steht für eine Erweiterung des Adressierraumes der im ersten Bereich ADU einzutragenden Adresse der folgenden Unterstation der Bereich AEW zur Verfügung. In einem Bereich ADM kann die Adresse der das Telegramm absendenden Station eingetragen werden. Beim Gruppenabfragetelegramm in FIG 3 ist in ADM die Adresse "00000" des Knotenpunktsrechners eingetragen. Desweiteren ist eine Nennung K1 vorgesehen, in der bevorzugt in Form eines einzelnen Bits eingetragen wird, ob das Telegramm in "Steuerrichtung" oder in "Überwachungsrichtung" auf dem Datenbus unterwegs ist. Der Eintrag K1=1 in FIG 3 bedeutet, daß das Gruppenabfragetelegramm GAT in "Steuerrichtung" von den Unterstationen weitergegeben wird. Ferner kann im Telegrammkopf TK eine zweite Nennung K2 zur Kennzeichnung des jeweiligen Telegrammtypes vorgesehen sein. Im Beispiel der FIG 3 ist im Bereich K2 eine zum Typ "Gruppenabfragetelegramm" gehörige Meldungsnummer hinterlegt.

Bevorzugt weist das Gruppenabfragetelegramm GAT am Ende einen "Telegrammsicherungsbereich" TSB auf. Dieser enthält ein oder mehrere Sicherungsblöcke, mit deren Hilfe ein sogenannter "Cyclic Redundancy Check" durchgeführt werden kann. Hiermit kann festgestellt werden, ob möglicherweise eine Beschädigung des Telegramminhaltes aufgrund von Übertragungsstörungen vorliegt.

Gemäß einer weiteren, im Beispiel der FIG 3 bereits dargestellten Ausführungsform enthält das Gruppenabfragetelegramm GAT einen zweiten Bereich ADZ, in welchen die zentrale Steuereinheit ZSE vor der Einspeisung des Gruppenabfragetelegrammes GAT in den Datenbus DB die Adresse der letzten Unterstation in der Reihe der Unterstationen der Gruppe einträgt. Hiermit kann vorteilhaft die Länge des aktuellen "Gruppenabfragezyklusses" festgelegt werden. Ist im Normalfall sowohl die Energieübertragung auf allen Kabelstrecken und den angeschlossenen Netzbetriebsmitteln, als auch die Datenübertragung auf den Kabelschirmen und den angeschlossenen Unterstationen des Fernwirkgerätes ordnungsgemäß möglich, so wird in den zweiten Bereich ADZ die Adresse derjenigen Unterstation eingetragen, welche die Reihe der Unterstationen am Ende des Datenbusses physikalisch abschließt.

Hat dagegen die zentrale Steuereinheit nach Durchgang eines Gruppenabfragetelegrammes von einer Unterstation und den in der Reihe dahinter liegenden Unterstationen kein Antworttelegramme empfangen, so sind aufgrund einer Störung diese Unterstationen nicht erreichbar. Tritt dieser Zustand beispielsweise am Ende von drei hintereinander folgenden Gruppenabfragezyklen unverändert auf, so ist es nicht sinnvoll weiterhin zu versuchen, die im Moment nicht erreichbaren Unterstationen durch Eintrag einer zu hohen Adresse im zweiten Bereich ADZ zu adressieren. In diesem Fall trägt die zentrale Steuereinheit in den zweiten Bereich ADZ nur die Adresse der letzten Unterstation in der Reihe ein, welche nach Empfang eines Gruppenabfragetelegrammes ein ordnungsgemäßes Antworttelegramm zurückgesendet hat. Der Gruppenabfragezyklus wird somit verkürzt und das Gruppenabfragetelegramm durch entsprechenden Adresseneintrag im zweiten Bereich ADZ nur noch an die Unterstationen gerichtet, welche momentan erreichbar sind. Diejenige Unterstation, deren Adresse mit der im zweiten Bereich ADZ eingetragenen Adresse übereinstimmt, speist nach Absendung von ihrem Antworttelegramm das Gruppenabfragetelegramm nicht mehr in "Steuerrichtung" in den Datenbus DB ein.

Es ist vorteilhaft, wenn die zentrale Steuereinheit im obigen Fall nach der Durchführung von z.B. zehn Gruppenabfragezyklen durch einen entsprechenden hohen Adresseneintrag im zweiten Bereich erneut ADZ versucht, z. B. die erste bislang nicht erreichbare Unterstation in der Reihe zu erreichen. Kann die zentrale Steuereinheit daraufhin von dieser Unterstation kein Antworttelegramm erhalten, so wird der Gruppenabfragezyklus wieder verkürzt und in den zweiten Bereich ADZ die Adresse der letzten erreichbaren Unterstation eingetragen. Andererseits kann der Gruppenabfragezyklus durch entsprechenden Adresseintrag in das Gruppenabfragetelegramm dynamisch verlängert werden, wenn eine, mehrere oder alle bislang gestörten Unterstationen wieder ein ordnungsgemäßes Antworttelegramm an die zentrale Steuereinheit senden.

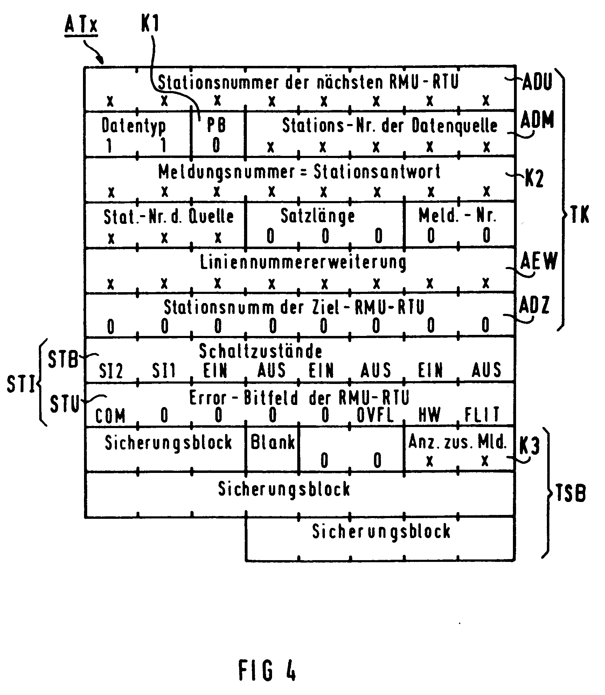

Gemäß einer weiteren, im Beispiel der FIG 4 ebenfalls bereits dargestellten Ausführungsform ist es vorteilhaft, wenn das Gruppenabfragetelegramm GAT einen dritten Bereich STQ enthält. In diesen kann die zentrale Steuereinheit ZSE vor dessen Einspeisung in den Datenbus an eine oder mehrere Unterstationen in der Gruppe gerichtete Kennungen eintragen. Mit diesen wird der jeweiligen Unterstation mitgeteilt, daß die in einem vorangegangenen Antworttelegramm dieser Unterstation gesendeten Statusänderungen des angeschlossenen Netzbetriebsmittels von den zentralen Steuereinheit als zulässig anerkannt und registriert wurden. Die in der jeweiligen Unterstation anstehenden Statusänderungen werden durch diese Kennung rückgesetzt, so daß in den ersten Bereich STE eines von der jeweiligen Unterstation zukünftig abzusendenden Antworttelegrammes zwischenzeitlich eingetretene Änderungen im Status des angeschlossenen Netzbetriebsmittels erneut eingetragen werden können. Die Kennungen im dritten Bereich STQ des Gruppenabfragetelegrammes haben somit die Funktion einer "Quittierung" mitgeteilter Statusänderungen durch die zentrale Steuereinheit.

Im Beispiel der FIG 3 besteht dieser dritte Bereich STQ aus zwei Zeilen mit jeweils 8 Bits. Dabei dienen die Bits in der ersten Zeile als Kennungen für die ersten acht Unterstationen mit den Nummern 1-8 in der Reihe. Dementsprechend sind die Bits in der zweiten Zeile an die weiteren acht Unterstationen mit den Nummern 9-16 in der Reihe gerichtet. Gemäß ihrer "Quittierfunktion" sind die Kennungen im dritten Bereich STQ in FIG 3 mit dem Begriff "Acknowledgebits" bezeichnet.

In FIG 4 ist beispielhaft ein Antworttelegramm ATx einer Unterstation RMU-RTU-x dargestellt. Ein Vergleich mit dem in FIG 3 dargestellten Gruppenabfragetelegramm GAT zeigt, daß das Antworttelegramm über einen nahezu identischen Aufbau verfügt. So ist ein Telegrammkopf TK mit den Bereichen ADU,ADM,K1,K2,AEW,ADZ vorhanden. Ferner wird das Telegramm durch einen Telegrammsicherungsbereich TSB abgeschlossen. Der dazwischen liegende Bereich STI hat bei dem Antworttelegramm die Funktion des "ersten Bereiches", in den erfindungsgemäß aktuelle Änderungen im Status zumindest von den mit der jeweiligen Unterstation verbundenen Netzbetriebsmitteln eingetragen werden.

Beim Antworttelegramm der FIG 4 wird im Bereich ADU des Telegrammkopfes TK wiederum die Adresse der "nächsten" Unterstation eingetragen. Da im Gegensatz zum Gruppenabfragetelegramm von FIg 3 das Antworttelegramm an die zentrale Steuereinheit gerichtet ist, d.h. gemäß dem Wert K1 = 0 in "Überwachungsrichtung" von Unterstation zu Unterstation weitergegeben wird, wird folglich von der jeweiligen Unterstation die Adresse der in Richtung auf den Anfang des Datenbusses benachbarten Unterstation in den Bereich ADU eingetragen. Ein weiterer Bereich AEW steht auch hier zur Vergrößerung des Adressierraumes von ADU zur Verfügung. In den Bereich ADM trägt die jeweilige Unterstation in diesem Fall ihre eigene Adresse als "Datenquelle" ein. Ferner ist im Bereich ADZ als "Zielunterstation" die Adresse 0000 des Knotenpunktrechners bzw. der zentralen Steuereinheit eingetragen, an die jedes Antworttelegramm gerichtet ist. Schließlich enthält die Kennung K2 eine den Typ "Antworttelegramm" kennzeichnende Meldungsnummer.

Im Beispiel der FIG 4 weist der "erste Bereich" STI zwei Zeilen zum Eintrag von "Statusinformationen" auf. So kann in der ersten Zeile STB der Status des angeschlossenen Betriebsmittels bevorzugt in Form von binären Kennungen hinterlegt werden, d.h. dessen "Schaltzustand". In der zweiten Zeile STU, welche in FIG 4 mit "Error-Bitfeld" bezeichnet ist, kann die Unterstation Informationen über ihren inneren Status eintragen. Die Ausführung eines Antworttelegrammes gemäß FIG 4 hat somit den Vorteil, daß im "Telegramm-Nutzdatenbereich" STI Informationen sowohl über den internen Betriebszustand der jeweiligen Unterstation als auch über den Betriebszustand des mindestens einen angeschlossenen Netzbetriebsmittels eingetragen werden können. Die empfangende zentrale Steuereinheit kann hiermit die Betriebsfähigkeit der Kabelstrecken und Netzbetriebsmittel des Energieversorgungsnetzes und gleichzeitig des Datenbusses, der Koppelübertrager und Unterstationen des Fernwirkgerätes überwachen.

Gemäß einer weiteren Ausführungsform der Erfindung können von einer Unterstation nach Empfang eines Gruppenabfragetelegrammes GAZ neben dem eigentlichen Antworttelegramm ein oder mehrere, ebenfalls an die zentrale Steuereinheit gerichtete "Zusatz-Antworttelegramme" abgesendet werden. Auch diese Enthalten einen Bereich, in den zumindest weitere Änderungen im Status des mit der Unterstation verbundenen, mindestens einen Netzbetriebsmittels eingetragen werden können. Diese Ausführungsform wird vorteilhaft dann eingesetzt, wenn z.B. aufgrund von mehreren angeschlossenen Netzbetriebsmitteln umfangreiche Statusinformationen an die zentrale Steuereinheit übermittelt werden müssen. Die Statusinformationen werden dann vorteilhaft auf ein "Antworttelegramm" und ein oder mehrere "Zusatz-Antworttelegramme" verteilt. Bevorzugt wird in diesem Fall das "reguläre" Antworttelegramm einer Unterstation im Anschluß an ein oder mehrere Zusatz-Antworttelegramme abgesendet. Es schließt also einen mindestens ein Zusatz-Antworttelegramm aufweisenden "Antwortzyklus" einer Unterstation ab.

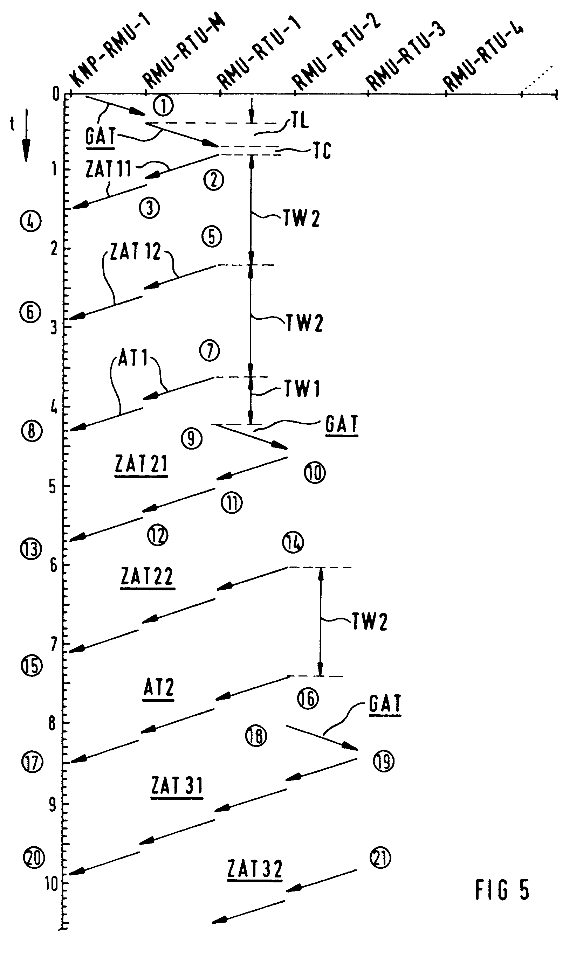

In FIG 5 ist beispielhaft in Form eines mit der Darstellung von FIG 2 vergleichbaren Orts- und Zeitdiagrammes der Ablauf eines Gruppenabfragezyklusses dargestellt, bei dem von jeder Unterstation neben dem "regulären" Antworttelegramm beispielhaft zwei Zusatz-Antworttelegramme an die zentrale Steuereinheit abgesendet werden. So wird ein Gruppenabfragetelegramm GAT im Zeitpunkt t = 0 vom Knotenpunktsrechner KNP-RMU-1 in Steuerrichtung in den Datenbus eingespeist, im Zeitpunkt 1 von der Modem Unterstation RMU-RTU-M empfangen, nach einer internen Telegrammbearbeitungszeit TC erneut in den Datenbus eingespeist und nach der üblichen Telegrammlaufzeit TL in dem mit 2 markierten Punkt von der ersten Unterstation RMU-RTU-1 empfangen. Die von dieser Unterstation an die zentrale Steuereinheit mitzuteilenden Statusinformationen seien so umfangreich, daß diese vorteilhaft auf zwei Zusatz-Antworttelegramme ZAT11,ZAT12 und das reguläre Antworttelegramm AT1 verteilt an die zentrale Steuereinheit übermittelt werden. So speist die Unterstation ...-1 zunächst das erste Zusatz-Antworttelegramm ZAT11 in "Überwachungsrichtung" in den Datenbus ein, welches nach Durchlauf durch die Modem-Unterstation ...-M im Zeitpunkt 3 und nach Ablauf einer weiteren Telegrammlaufzeit TL in dem mit 4 markierten Zeitpunkt vom Knotenpunktsrechner empfangen werden kann. Nach Ablauf einer Wartezeit TW2 nach Absendung des Zusatz-Antworttelegrammes ZAT11 speist die Unterstation ...-1 das zweite Zusatz-Antworttelegramm ZAT12 in "Überwachungsrichtung" in den Datenbus ein, welches in dem mit 6 markierten Zeitpunkt vom Knotenpunktsrechner empfangen werden kann. Der "Antworttelegrammzyklus" der Unterstation RMU-RTU-1 wird nach Ablauf einer weiteren Wartezeit TW2 nach Absendung des Zusatz-Antworttelegrammes ZAT12 durch Absendung des "regulären" Antworttelegrammes AT1 in Überwachungsrichtung in dem mit 7 markierten Zeitpunkt abgeschlossen. Dieses Antworttelegramm wird schließlich in dem mit 8 markierten Zeitpunkt von der zentralen Steuereinheit empfangen.

Diese Ausführungsform der Erfindung hat den Vorteil, daß bei Auftreten von größeren Mengen an Statusinformationen, welche von einem oder mehreren Netzbetriebsmitteln an einer Unterstation und/oder von dieser Unterstation selbst herrühren können, kein langes "Sammeltelegramm" gebildet wird, sondern die Daten portioniert auf Zusatz-Antwort- und Antworttelegramme übermittelt werden. Dies hat den Vorteil, daß die Wahrscheinlichkeit eines Datenverlustes während des Laufes der Telegramme bis zur zentralen Steuereinheit verringert wird, da jedes Telegramm nur eine begrenzte Länge aufweist. Zudem tritt der Vorteil auf, daß sowohl die Antworttelegramme als auch die dazugehörigen Zusatz-Antworttelegramme annähernd die gleiche Länge aufweisen, und somit deren Lauf zwischen den Unterstationen selbst bei unterschiedlichen Längen der Kabelstrecken annähernd die gleiche Laufzeit TL einnimmt. Im Beispiel der FIG 5 ist dies daran zu erkennen, daß die zu den Zusatz-Antworttelegrammen ZAT11,ZAT12 und dem dazugehörigen Antworttelegramm AT1 gehörigen, und von rechts oben nach links unten geneigten Pfeile annähernd gleiche Neigung und Länge aufweisen. Die Zeitpunkte, in denen die Zusatz-Antwort- und Antworttelegramme von der zentralen Steuereinheit empfangen werden können, sind somit von der zentralen Steuereinheit leicht bestimm- und überwachbar.

Bei dem Beispiel in FIG 5 speist die Unterstation RMU-RTU-1 dann zur Fortsetzung des Gruppenabfragezyklusses nach Ablauf der Wartezeit TW1 in dem mit 9 markierten Zeitpunkt das Gruppenabfragetelegramm GAT erneut in "Steuerrichtung" in den Datenbus ein. Dieses wird nach einer Telegrammlaufzeit TL in dem mit 10 markierten Zeitpunkt von der in der Reihe folgenden Unterstation RMU-RTU-2 empfangen. Auch diese verteilt die an die zentrale Steuereinheit zu übermittelnden Statusinformationen auf zwei Zusatz-Antworttelegramme ZAT21,ZAT22 und ein "reguläres" Antworttelegramm AT2, welche in den mit 10,14,16 markierten Zeitpunkten in "Überwachungsrichtung" in den Datenbus eingespeist und in den mit 13,15,17 markierten Zeitpunkten vom Nnotenpunktsrechner empfangen und ausgewertet werden.

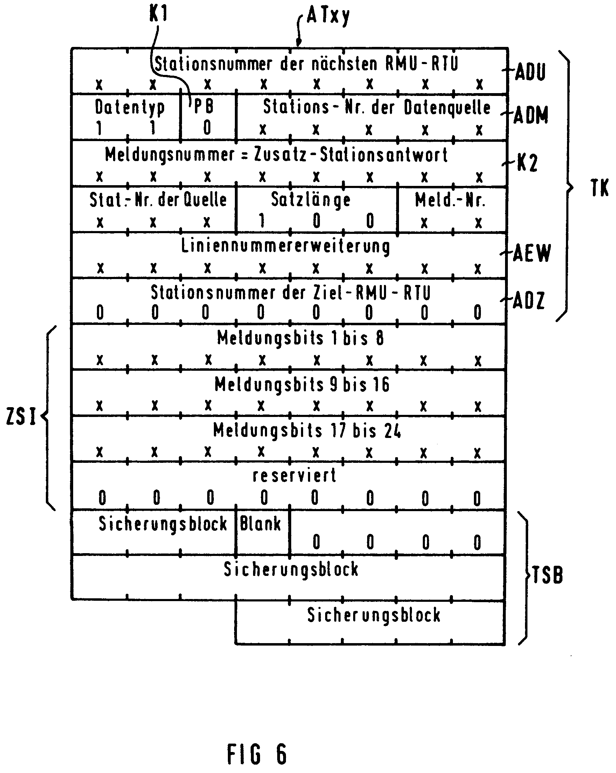

In FIG 6 ist der beispielhafte Aufbau eines "Zusatz-Antworttelegrammes" ATxy dargestellt. Dabei entspricht Aufbau und Inhalt des Telegrammkopfes TK und des Telegrammsicherungsbereiches TSB wiederum annähernd den entsprechenden Bereichen z.B. im Antworttelegramm der FIG 4. Als Unterschied ist lediglich als zweite Kennung K2 eine den Typ "Zusatz-Antworttelegramm" kennzeichnende Meldungsnummer eingetragen. Bei dem dargestellten Beispiel dient der Bereich ZSI zur Eintragung zusätzlicher Statusinformationen. In FIG 6 stehen hierzu in einer ersten Zeile von ZSI die Meldungsbits 1-8, in einer zweiten Zeile die Meldungsbits 9-16 und in einer dritten Zeile die Meldungsbits 17-24 zur Verfügung.

Gemäß einer weiteren, im Beispiel der FIG 4 bereits dargestellten Ausführungsform weist ein Antworttelegramm einen weiteren Bereich K3 auf, in dem von der jeweiligen Unterstation die Anzahl der im Rahmen eines "Antworttelegrammzyklusses" vorangehend in den Datenbus eingespeisten Zusatz-Antworttelegrammen enthalten ist. Im Beispiel der FIG 5 ist dieser zweite Bereich K3 in Form von zwei Bits im Telegrammsicherungsbereich TSB am Telegrammende angeordnet. Dieser würde z.B. beim Antworttelegramm AT1 die binäre Zahl 2 aufweisen, da von der Unterstation RMU-RTU-1 vor Absendung von AT1 Zusatz-Antworttelegramme ZAT11, ZAT12 in "Überwachungsrichtung" abgesendet wurden. Aufgrund der im zweiten Bereich K3 enthaltenen Zahl wird somit der empfangenden zentralen Steuereinheit die Auswertung erleichtert, welche Zusatztelegramme zu einem Antworttelegramm gehören, und welcher Unterstation diese Telegramme zuzuordnen sind.

Gemäß einer letzten Ausführungsform der Erfindung kann die zentrale Steuereinheit ZSE nach dem Empfang des letzten zu erwartenden Antworttelegrammes der jeweils letzten erreichbaren Unterstation in der Reihe am Ende eines "Gruppenabfragezyklusses" und vor dem Beginn eines neuen "Gruppenabfragezyklusses", d.h. der erneuten Einspeisung eines Gruppenabfragetelegrammes, bei Bedarf ein an eine bestimmte Unterstation gerichtetes "Befehlstelegramm" in den Datenbus einspeisen. Hiermit können Veränderungen des Betriebszustandes der angesprochenen Unterstation bzw. Schaltbefehle zur Änderung des Betriebszustandes des mit der Unterstation verbundenen, mindestens einen Netzbetriebsmittels ausgelöst werden.

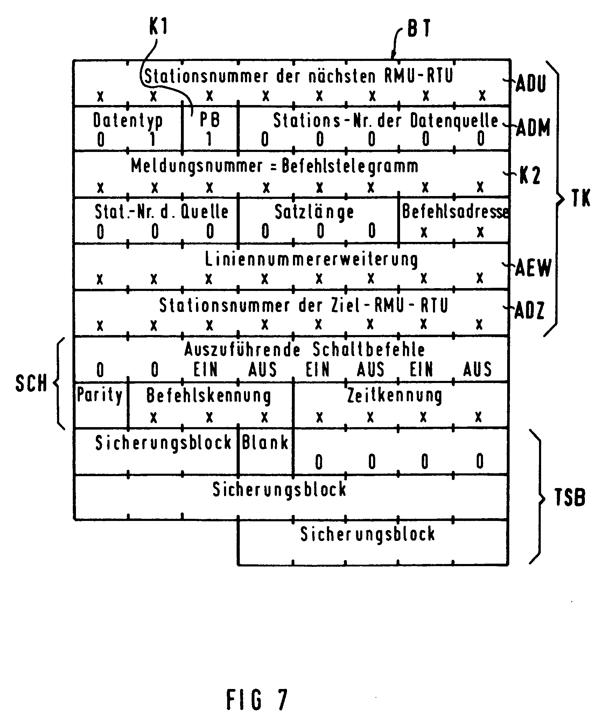

In FIG 7 ist ein vorteilhafter Aufbau eines "Befehlstelegrammes" BT beispielhaft dargestellt. Der Vergleich von FIG 7 mit dem "Gruppenabfragetelegramm" GAT in FIG 3, dem "Antworttelegramm" ATx in FIG 4 bzw. dem "Zusatz-Antworttelegramm" ATxy in FIG 6 zeigt, daß auch das Befehlstelegramm bevorzugt einen nahezu identischen Telegrammaufbau aufweist. So ist wiederum ein die Bereiche ADU,ADM, K1,K2,AEW,ADZ aufweisender Telegrammkopf TK und ein Telegrammsicherungsbereich TSB am Ende vorhanden. In der gleichen Weise wie beim Gruppenabfragetelegramm wird auch hier in dem Bereich ADU von der jeweiligen Unterstation die Adresse der in "Steuerrichtung" unmittelbar folgenden Unterstation in der Reihe eingetragen. Unter Zuhilfenahme AEW kann wiederum die Adresse in ADU erweitert werden. Ferner weist die erste Kennung K1 den Wert 1 auf, da das Befehlstelegramm BT in der gleichen Weise wie das Gruppenabfragetelegramm GAT in "Steuerrichtung" von Unterstation zu Unterstation weitergereicht wird. Ebenfalls ist im Bereich ADM die Adresse der zentralen Steuereinheit bzw. eines Knotenpunktrechners am Anfang des Datenbusses als "Datenquelle" eingetragen. Schließlich ist im Bereich ADZ als Ziel die Adresse derjenigen Unterstation eingetragen, welche die im Befehlstelegramm BT enthaltenen Schaltbefehle ausführen soll.

Diese sind in FIG 7 in einem wiederum aus zwei Zeilen bestehenden Bereich SCH eingetragen. In der ersten Zeile sind die gewünschten Schaltzustände in Form von binären Kennungen "EIN" bzw. "AUS" eingetragen. Die zweite Zeile enthält weitere Kennungen, damit die jeweilige Unterstation die in der ersten Zeile enthaltenen Schaltbefehle in der jeweils gewünschten Weise ausführen kann. So ist ein Bereich "Befehlskennung" vorgesehen. An dem dortigen Eintrag erkennt die Unterstation, ob die Schaltbefehle in Zeile 1 als "Dauerbefehle", "Langzeitbefehle" oder als "Kurzzeitbefehle" auszuführen sind. Handelt es sich um Langzeit- bzw. Kurzzeitbefehle, so ist in einem weiteren Bereich "Zeitkennung" die Dauer der gewünschten Befehlslaufzeit eingetragen. Der dort eingetragene Wert bei einem Langzeitbefehl beispielsweise die Dimension "Stunden", während der Wert bei einem Kurzzeitbefehl beispielsweise die Dimension "Minuten" aufweist.

## Patentansprüche

1. Fernwirkgerät zur Überwachung und Steuerung von Netzbetriebsmitteln (NB1,NB2,...) in einem Energieversorgungsnetz (N11), die in Netzpunkten (NP1,NP2,...) an Kabelstrecken (NK1,NK2,...) angeschlossen sind, welche zur Energieübertragung dienen, mit
a) einer zentralen Steuereinheit (ZSE), an die über einen Datenbus (DB) mindestens eine Gruppe von Unterstationen (RMU-RTU-1,RMU-RTU-2,...) in Reihe angeschlossen ist, und jede der Unterstationen zur Überwachung und Steuerung mit mindestens einem Netzbetriebsmittel (NB1, NB2,...) verbunden ist, und
b) der Datenbus (DB) Noppelübertrager (KU) aufweist, welche an den Enden (KE) von Nabelstrecken (NK1,NK2,...) jeweils am geerdeten Kabelschirm (KE) angeschlossen sind, und womit eine Dateneinspeisung bzw. Datenauskopplung in den bzw. aus dem Erdstromkreis (ES1,ES2,...) der jeweiligen Nabelstrecke (NK1,NK2,...) bewirkt wird, und die
c) zentrale Steuereinheit (ZSE) zyklisch ein Gruppenabfragetelegramm (GAT) in den Datenbus (DB) einspeist, welches
c1) nach Empfang in einer Unterstation (RMU-RTU-1) der Gruppe die Absendung eines an die zentrale Steuereinheit (ZSE) gerichteten Antworttelegrammes (AT1) der Unterstation (RMU-RTU-1) auslöst, und das Antworttelegramm einen ersten Bereich (STI) aufweist, in dem zumindest aktuelle Änderungen im Status (STI; STB,STU) des mit der Unterstation (RMU-RTU-1) verbundenen mindestens einen Netzbetriebsmittels (NB1) eingetragen sind, und welches
c2) nach Ablauf einer Wartezeit (TW1) von der Unterstation (RMU-RTU-1) in Richtung auf die in der Reihe folgende Unterstation (RMU-RTU-2) der Gruppe erneut in den Datenbus (DB) eingespeist wird, und
c3) die zentrale Steuereinheit (ZSE) aus den empfangenen Antworttelegrammen den aktuellen Betriebszustand des Energieversorgungsnetzes rekonstruiert (FIG.1, 2 und 4).

2. Fernwirkgerät nach Anspruch 1, wobei nach Empfang eines Gruppenabfragetelegrammes (GAT) in einer Unterstation (RMU-RTU-1) von dieser ein oder mehrere an die zentrale Steuereinheit (ZSE) gerichtete Zusatz-Antworttelegramme (ZAT11, ZAT12) abgesendet werden, welche einen Bereich (ZSI) enthalten, in den zumindest weitere Änderungen im Status des mit der Unterstation (RMU-RTU-1) verbundenen Netzbetriebsmittels (NB1) eingetragen sind.

3. Fernwirkgerät nach Anspruch 2, wobei das Antworttelegramm (AT1) einer Unterstation im Anschluß an das oder die dazugehörigen Zusatz-Antworttelegramme (ZAT11,ZAT12) abgesendet wird, und dieses einen zweiten Bereich (K3) aufweist, in dem die Anzahl der vorangegangenen Zusatz-Antworttelegramme (ZAT11,ZAT12) enthalten ist (FIG.5,6,4).

4. Fernwirkgerät nach einem der vorangegangenen Ansprüche, wobei die zentrale Steuereinheit (ZSE) nach Einspeisung eines Gruppenabfragetelegrammes (GAT) bei jedem von den einzelnen Unterstationen (RMU-RTU-1,RMU-RTU-2,...) der Gruppe zu erwartenden Antwort- bzw. Zusatz-Antwort telegramm (ZAT11,ZAT12; AT1,AT2,...) überwacht, ob unter Berücksichtigung von Lauf-, Warte- und Bearbeitungszeiten (TL,TW1,TW2,TC) die Antwort- bzw. Zusatz-Antworttelegramme (ZAT11,ZAT12; AT1,AT2,...) annähernd rechtzeitig empfangen werden (FIG.2,5).

5. Fernwirkgerät nach einem der vorangegangenen Ansprüche, wobei
a) ein Gruppenabfragetelegramm (GAT) bzw. Antwort- oder Zusatzantworttelegramm (AT1..., ZAT11..) einen ersten Bereich (ADU) enthält, in den die zentrale Steuereinheit (ZSE) bzw. die jeweilige Unterstation vor der Einspeisung des Gruppenabfragetelegrammes (GAT) bzw. Antwort- oder Zusatzantworttelegrammes (AT1..., ZAT11...) in den Datenbus (DB) die Adresse der in Richtung auf das Ende bzw. den Anfang des Datenbusses folgenden Unterstation in der Reihe eingeträgt, und
b) eine Unterstation ein Gruppenabfragetelegramm (GAT) bzw. Antwort- oder Zusatzantworttelegramm (AT1..., ZAT11...) nur dann empfängt, wenn die Adresse im ersten Bereich (ADU) mit der eigenen Adresse übereinstimmt, und
c) eine Unterstation vor der erneuten Einspeisung eines empfangenen Gruppenabfragetelgrammes (GAT) bzw. Antwort- oder Zusatzantworttelegrammes (AT1..., ZAT11...) in den Datenbus (DB) die Adresse der in Richtung auf das Ende bzw. den Anfang des Datenbusses folgenden Unterstation in den ersten Bereich (ADU) einträgt (FIG.3).

6. Fernwirkgerät nach einem der vorangegangenen Ansprüche, wobei
a) ein Gruppenabfragetelegramm (GAT) einen zweiten Bereich (ADZ) enthält, in den die zentrale Steuereinheit (ZSE) vor der Einspeisung des Gruppenabfragetelegrammes (GAT) in den Datenbus (DB) die Adresse der letzten Unterstation (RMU-RTU-16) in der Reihe der Unterstationen (RMU-RTU-1,RMU-RTU-2,...) der Gruppe eingeträgt, welche nach Empfang eines vorangegangenen Gruppenabfragetelegrammes zumindest ein Antworttelegramm (AT16) gesendet hat, und
b) diejenige Unterstation, deren Adresse mit der im zweiten Bereich (ADZ) eingetragenen Adresse übereinstimmt das Gruppenabfragetelegramm (GAT) nach Absendung zumindest des Antworttelegrammes nicht erneut in den Datenbus (DB) einspeist (FIG.3).

7. Fernwirkgerat nach einem der vorangegangenen Ansprüche, wobei die zentrale Steuereinheit (ZSE) nach dem Empfang des letzten zu erwartenden Antworttelegrammes (AT16) und vor der erneuten Einspeisung eines Gruppenabfragetelegrammes (GAT) bei Bedarf ein an eine bestimmte Unterstation (RMU-RTU-x) der Gruppe gerichtetes Befehlstelegramm in den Datenbus (DB) einspeist, welches mindestens einen Schaltbefehl (SCH) zur Änderung eines Status des mit der Unterstation (RMU-RTU-x) verbundenen Netzbetriebsmittels (NBx) enthält (FIG.7).

8. Fernwirkgerät nach einem der vorangegangenen Ansprüche, wobei
a) ein Gruppenabfragetelegramm (GAT) einen dritten Bereich (STQ) enthält, in den die zentrale Steuereinheit (ZSE) vor der Einspeisung des Gruppenabfragetelegrammes (GAT) in den Datenbus (DB) an eine oder mehrere Unterstationen (RMU-RTU-1,RMU-RTU-2,...) der Gruppe gerichtete Kennungen ("Acknowledgebits") einträgt, wenn die in einem vorangegangenen Antwort- bzw. Zusatz-Antworttelegramm (ZAT11,ZAT12; AT1) der jeweiligen Unterstation (RMU-RTU-1) gesendeten Statusänderungen (STI;STB,STU) des verbundenen Netzbetriebsmittels (NB1) von der zentralen Steuereinheit (ZSE) als zulässig registriert wurden, und
b) eine betroffene Unterstation (RMU-RTU-1) von einer Kennung rückgesetzt wird, so daß in den ersten Bereich (STI) eines zukünftig abzusendenden Antwort- bzw. Zusatz-Antworttelegrammes (ZAT11,ZAT12; AT1) zwischenzeitlich eingetretene Änderungen zumindest im Status (STB,STU) des mit der Unterstation (RMU-RTU-1) verbundenen Netzbetriebsmittels (NB1) erneut eingetragen werden können (FIG.3).
